# EUROPEAN PATENT SPECIFICATION

(11) **EP 2 610 153 B1**
(45) Date of publication and mention of the grant of the patent: **26.08.2015**
(21) Application number: 12188530.5
(22) Date of filing: 15.10.2012
(51) Int. Cl.: B62J 17/02, B62J 17/06

(54) **Saddle-ride type vehicle**
Sattelfahrzeug
Véhicule du type à selle

(30) Priority: 28.12.2011 JP 2011288300
(43) Date of publication of application: 03.07.2013
(73) Proprietor: Yamaha Hatsudoki Kabushiki Kaisha, Iwata-shi, Shizuoka 438-8501 (JP)
(72) Inventor: Kongnakorn, Unnop, 10540 Samutprakarn (TH)
(74) Representative: Grünecker Patent- und Rechtsanwälte PartG mbB

(56) References cited:
- WO-A1-02/055370
- JP-A- 2005 350 022

## Description

### Technical Field

The present invention relates to a saddle-ride type vehicle.

### Background Art

Conventionally, saddle-ride type vehicles have included those wherein a front cover assembly for covering a head pipe is configured from a plurality of separate cover members. The motorcycle disclosed in Japanese Patent Publication No. 2006-96233, for example, comprises a front cover, left and right main pipe side covers, and left and right leg shields. The left and right main pipe side covers are attached to the front cover. The left and right leg shields are attached to the front cover and the left and right main pipe side covers.

JP 2005-350022 on which the preamble of claim 1 is based, discloses a cover assembly for an electric vehicle. The vehicle comprises a front cover and a rear cover. The rear cover is connected to the front cover from the rear side of the vehicle, which also covers the rear side of the steering column.

WO 02/055370 A1 discloses a body cover structure for a motorcycle and shows paired mainframe side covers supported by the body frame, which are joined at the back of the head part and the front portion of the upper cover is fastened to the joint portions of the two mainframe side covers.

### SUMMARY OF INVENTION

### [Technical Problem]

In cases in which the front cover assembly is configured from a plurality of separate cover members, when the seams of the cover members are directly contacted by water during rain and/or a vehicle wash, there is a possibility of the water seeping through the seams into the interior of the front cover assembly. In the motorcycle of Japanese Patent Publication No. 2006-96233, for example, there is a possibility of water seeping into the interior of the cover through the seams between the front cover and the main pipe side covers. Or there is a possibility of water seeping into the interior of the cover through the seams between the main pipe side covers and the left and right leg shields. Because electrical components are sometimes disposed in the cover interior, the seeping of water into the cover interior is preferably avoided.

An object of the present invention is to provide a saddle-ride type vehicle which can suppress the seeping of water through the seams in the cover members.

### [Solution to Problem]

In accordance with the present invention there is provided a saddle-ride type vehicle as set out in independent claim 1. Preferred embodiments of the present invention are laid down in the appended dependent claims 2-13.

### [Advantageous Effects of Invention]

In the saddle-ride type vehicle according to claim 1 of the present invention, the border between the cover members is disposed between the first securing portion and the second securing portion for attaching the separate cover to the front cover assembly. Consequently, the border between the cover members is covered by the separate cover. Therefore, water can be suppressed from falling directly onto the border between the cover members. Water can thereby be suppressed from seeping through the seams in the cover members. Compared to cases in which the securing portions are disposed as being offset to one side of the border between the cover members, the separate cover can be secured more firmly. The occurrence of abnormal noises due to unintended vibrations of the separate cover can thereby be prevented. The separate cover can also be made thinner and lighter.

In the saddle-ride type vehicle according to claim 2 of the present invention, the separate cover can be secured more firmly to the front cover assembly due to being attached to two covers. The occurrence of abnormal noises due to unintended vibrations of the separate cover can thereby be prevented. The separate covercan also be made thinner and lighter.

In the saddle-ride type vehicle according to claim 1 of the present invention, at least portion of the border between the second cover member and the first cover member to which the headlight is attached is covered by the separate cover. Water can thereby be suppressed from reaching the interior of the headlight.

In the saddle-ride type vehicle according to claim 1 of the present invention, the border between the first cover member and the second cover member is disposed in a position where it is visible in a side view of the vehicle. Because at least portion of the border disposed in such a position is covered by the separate cover, the air flowing past the side of the front cover assembly can be suppressed from detaching from the surface of the front cover assembly in the border. It is thereby possible to suppress increases of air resistance and occurrences of wind noise.

In the saddle-ride type vehicle according to claim 3 of the present invention, the front end and/or rear end of the separate cover is disposed in a position distanced from the border. Water can thereby be further suppressed from seeping through the border.

In the saddle-ride type vehicle according to claim 4 of the present invention, at least portion of the separate cover is positioned farther inward in the vehicle width direction than the outermost portion of the border. Consequently, water that would otherwise seep in from a direction tilted relative to the border can be more reliably prevented from seeping in.

In the saddle-ride type vehicle according to claim 5 of the present invention, the separate cover can easily be attached to the front cover assembly by inserting the securing member into the through-hole of the separate cover and the through-hole of the front cover assembly.

In the saddle-ride type vehicle according to claim 6 of the present invention, the securing member can be inserted into the through-hole of the separate cover and the through-hole of the front cover assembly from the outer side of the separate cover. Therefore, the separate cover can easily be attached and removed.

In the saddle-ride type vehicle according to claim 7 of the present invention, the rigidity of the front cover assembly can be improved by a plurality of protuberances.

In the saddle-ride type vehicle according to claim 8 of the present invention, at least some of the securing portions are formed on the peaks of the protuberances. Therefore, the attachment strength of the separate cover can be improved.

In the saddle-ride type vehicle according to claim 9 of the present invention, the space between the separate cover and the front cover assembly can be utilized as an air passage. Due to air passing between the separate cover and the front cover assembly, dust and the like that has entered the gap between the separate cover and the front cover assembly can be expelled to the exterior by traveling air currents.

In the saddle-ride type vehicle according to claim 10 of the present invention, the rigidity of the front cover assembly can be improved by the protuberances. The space between the separate cover and the recesses between the protuberances can be utilized as an air passage.

In the saddle-ride type vehicle according to claim 11 of the present invention, the distance from the border to the headlight can be increased because the headlight is attached to the protrusion. Water can thereby be suppressed from reaching the headlight even when water has seeped into the interior of the front cover assembly through the border.

In the saddle-ride type vehicle according to claim 12 of the present invention, the rigidity of the protrusion can be improved by the rib. Particularly, the rigidity with which the headlight is supported in the protrusion can be improved.

In the saddle-ride type vehicle according to claim 13 of the present invention, the position light cover is separate from the front cover assembly and is disposed in front of the first cover member. Therefore, the distance from the border to the position light can be increased. Water can thereby be suppressed from reaching the position light even when water has seeped into the interior of the front cover assembly through the border.

### BRIEF DESCRIPTION OF THE DRAWINGS

FIG. 1 is a perspective view of the saddle-ride type vehicle according to an embodiment of the present invention;
FIG. 2 is a left side view of the saddle-ride type vehicle without the separate cover attached;
FIG. 3 is a front view of the saddle-ride type vehicle without the separate cover attached;
FIG. 4 is a plan view of the saddle-ride type vehicle without the separate cover attached;
FIG. 5 is a rear view of the second cover member;
FIG. 6 is a left side front view of the front cover assembly without the separate cover attached;
FIG. 7 is a left side view of the saddle-ride type vehicle with the separate cover attached;
FIG. 8 is a front view of the saddle-ride type vehicle with the separate cover attached;
FIG. 9 is a left side view of the front cover assembly with the separate cover attached;
FIG. 10 is a cross-sectional view along line A-A in FIG. 9;
FIG. 11 is a cross-sectional view along line B-B in FIG. 9; and
FIG. 12 is a cross-sectional view along line C-C in FIG. 9.

### DETAILED DESCRIPTION OF THE EMBODIMENTS

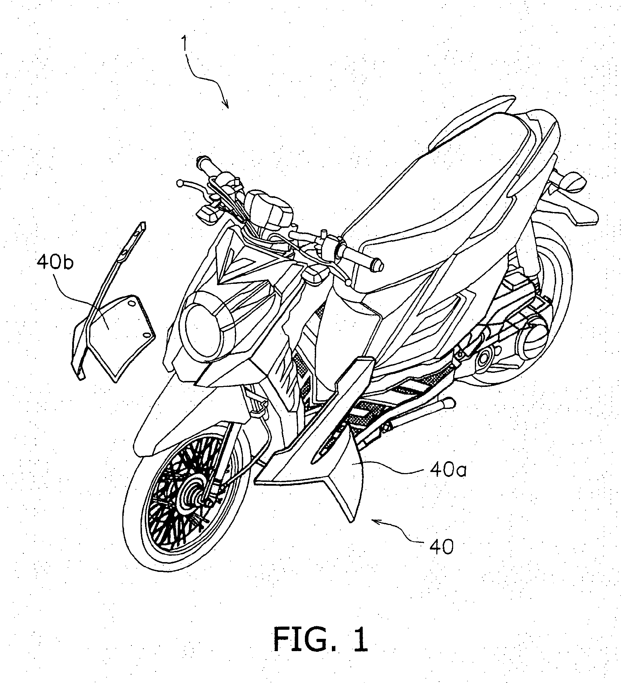

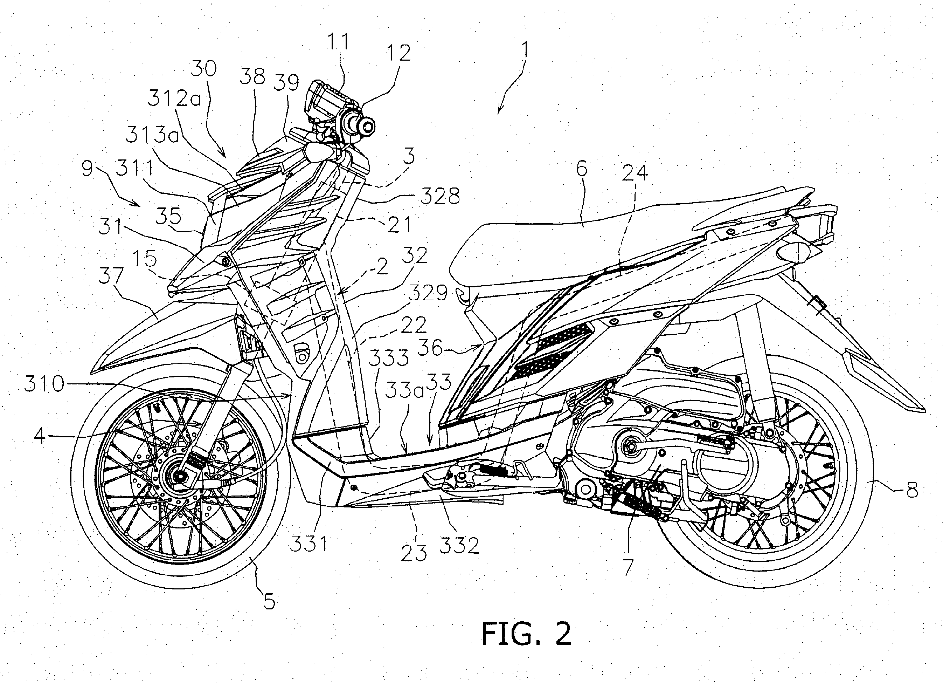

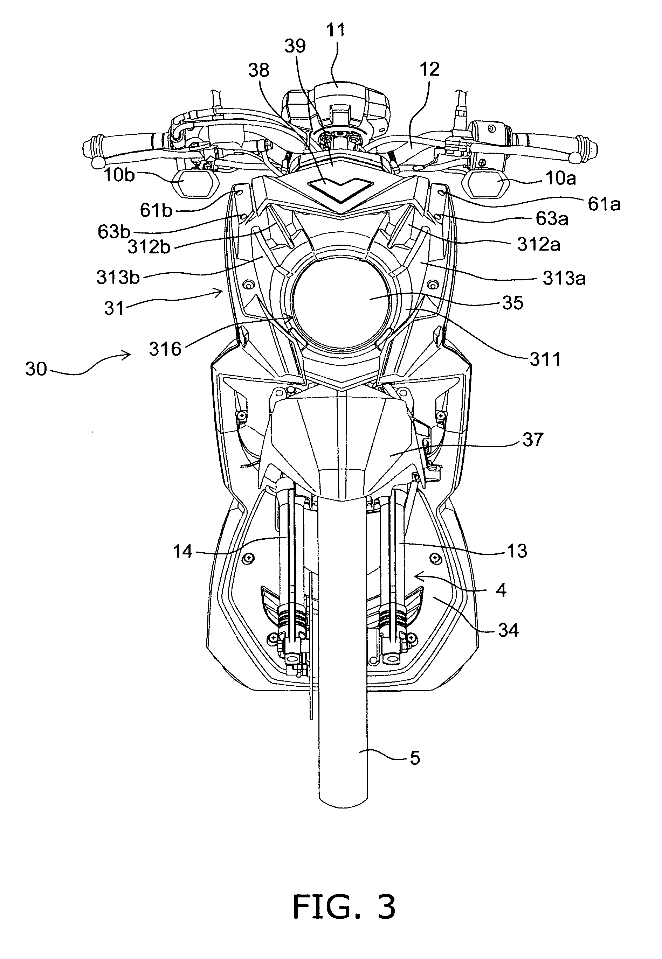

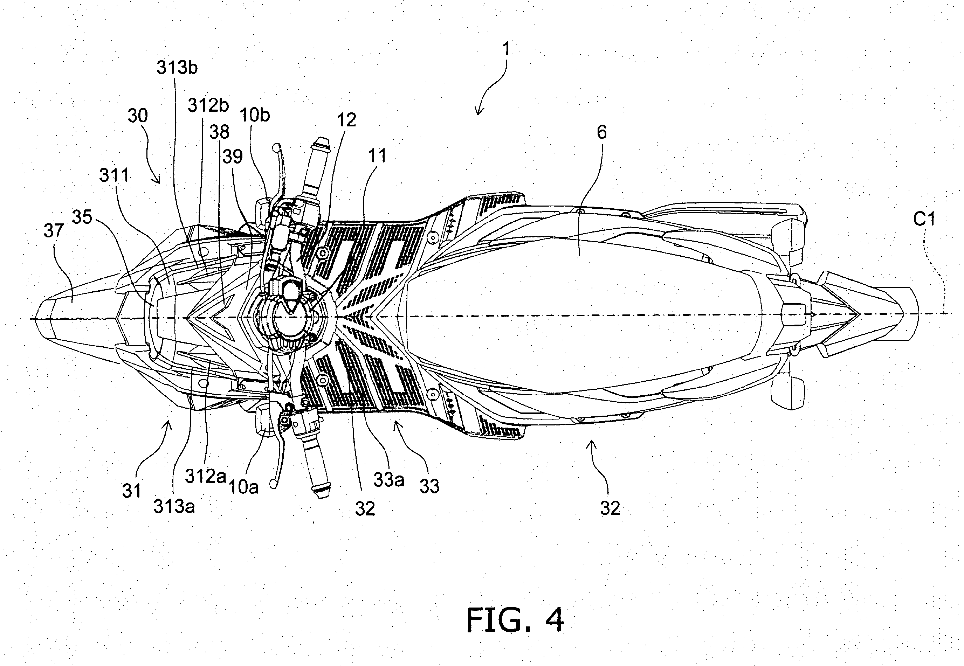

The saddle-ride type vehicle according to an embodiment of the present invention is described hereinbelow with reference to the drawings. FIG. 1 is a perspective view of the saddle-ride type vehicle 1 according to the present embodiment. The saddle-ride type vehicle 1 is a scooter type motorcycle. A separate cover 40 is removably attached to the saddle-ride type vehicle 1, as shown in FIG. 1. FIG. 2 is a left side view of the saddle-ride type vehicle 1 without the separate cover 40 attached. FIG. 3 is a front view of the saddle-ride type vehicle 1 without the separate cover 40 attached. FIG. 4 is a plan view of the saddle-ride type vehicle 1 without the separate cover 40 attached. The saddle-ride type vehicle 1 includes a vehicle body frame 2, a steering shaft 3, a front fork 4, a front wheel 5, a seat 6, an engine unit 7, a rear wheel 8, and a vehicle body cover 9, as shown in FIG. 2. The forward-backward direction used in the description hereinbelow refers to the vehicle body forward-backward direction as seen by a rider sitting in the seat 6. The left-right direction refers to the vehicle body left-right direction as seen by a rider sitting in the seat 6. In the present embodiment, the phrase "outward in the vehicle width direction" means a direction away from a center line (see C1 in FIG. 4) of the vehicle extending in the forward-backward direction through the center in the vehicle width direction. The phrase "inward in the vehicle width direction" means a direction toward the center line of the vehicle extending in the forward-backward direction through the center in the vehicle width direction.

The vehicle body frame 2, for example, is formed from an iron pipe. The vehicle body frame 2 includes a head pipe portion 21, a down frame portion 22, and under frame portion 23, and a rear frame portion 24. The vehicle body frame 2 may be molded integrally by bending or another form of machining, or the vehicle body frame 2 may be configured by integrating a plurality of components by welding or the like. The head pipe portion 21 is positioned in the middle of the vehicle in the vehicle width direction. The steering shaft 3 is rotatably inserted into the head pipe portion 21. A handle portion 12 is linked to the top of the steering shaft 3. Flashers 10a and 10b and a speed meter unit 11 for displaying the vehicle speed are attached to the handle portion 12 as shown in FIG. 3. The front fork 4 is linked to the bottom of the steering shaft 3.

The down frame portion 22 is connected to the head pipe portion 21. The down frame portion 22 extends downward from the head pipe portion 21. The under frame portion 23 is connected to the bottom end of the down frame portion 22. The under frame portion 23 extends rearward from the down frame portion 22. The rear frame portion 24 is connected to the rear end of the under frame portion 23. The rear frame portion 24 extends rearward and upward from the rear end portion of the under frame portion 23. The seat 6 is disposed above the rear frame portion 24. The seat 6 is positioned rearward of the head pipe portion 21. The seat 6 is supported on the vehicle body frame 2. Specifically, the seat 6 is attached to the rear frame portion 24.

The engine unit 7 is swingably attached to the vehicle body frame 2 via a bracket (not shown). The engine unit 7 includes an output shaft (not shown). The rear wheel 8 is rotatably supported on this output shaft.

The front fork 4 rotatably supports the front wheel 5. The front fork 4 includes a first support member 13, a second support member 14, and a bracket 15 (see FIG. 2), as shown in FIG. 3. The first support member 13 and the second support member 14 are disposed in alignment in the vehicle width direction. The bracket 15 supports the first support member 13 and the second support member 14. The bracket 15 is connected to the steering shaft 3. Specifically, the bottom end of the steering shaft 3 is connected to the bracket 15. The top end of the first support member 13 and the top end of the second support member 14 are connected to the bracket 15. The steering shaft 3 extends upward from the bracket 15.

The vehicle body cover 9 includes a front cover assembly 30, a side cover 36, and an under cover 33, as shown in FIG. 2. The vehicle body cover 9 is formed from a resin. The front cover assembly 30 covers the front, rear, and both sides of the head pipe portion 21.

The side cover 36 is positioned below the seat 6. The side cover 36 covers the front and both sides of the rear frame portion 24 disposed below the seat 6. The under cover 33 is positioned between the front cover assembly 30 and the side cover 36 in the forward-backward direction. The under cover 33 links the front cover assembly 30 and the side cover 36. The under cover 33 includes a top surface member 331 and a bottom surface member 332. The under cover 33 includes a foot board 33a. Specifically, the top surface member 331 includes the foot board 33a. The foot board 33a is positioned between the front wheel 5 and the seat 6 in the forward-backward direction. The foot board 33a is positioned below the seat 6. The foot board 33a is a surface where the rider sitting in the seat 6 rests their feet during travel. The foot board 33a is positioned above the under frame portion 23. The foot board 33a is positioned between the down frame portion 22 and the rear frame portion 24 in the forward-backward direction. The foot board 33a is formed to be flat across the vehicle width direction. The phrase "the foot board 33a is...flat" herein means that it is flat enough for the rider to be able to rest their feet on any portion of the footrest. Specifically, bumps for purposes such as slip prevention, for example, may be formed in the foot board 33a. The top surface member 331 includes a middle protrusion 333. The middle protrusion 333 is positioned in the middle of the front portion of the top surface member 331 in the vehicle width direction. The middle protrusion 333 protrudes upward from the foot board 33a. The bottom surface member 332 is disposed below the top surface member 331.

The front cover assembly 30 includes a plurality of cover members. Specifically, the front cover assembly 30 includes a first cover member 31 and a second cover member 32. The first cover member 31 covers at least the front of the head pipe portion 21. Specifically, the first cover member 31 covers the head pipe portion 21 and the down frame portion 22 from the front. The first cover member 31 includes a recess 310 that is recessed rearward as seen from the side of the vehicle. An inner fender 34 is disposed in the recess 310 as shown in FIG. 3. The front wheel 5 is disposed in front of the inner fender 34. A front fender 37 is disposed above the front wheel 5. The rear portion of the front fender 37 is disposed in the recess 310.

The first cover member 31 includes a protrusion 311 which protrudes forward. The protrusion 311 is disposed in the middle of the first cover member 31 in the vehicle width direction, as shown in FIGS. 3 and 4. The first cover member 31 includes a plurality of ribs 312a, 313a, 312b, and 313b connected to the protrusion 311. Specifically, the first cover member 31 includes a first left rib 312a, a second left rib 313a, a first right rib 312b, and a second right rib 313b. The first left rib 312a and the second left rib 313a both extend at an incline outward and upward in the vehicle width direction from the protrusion 311, as shown in FIG. 3. Specifically, the first left rib 312a and the second left rib 313a both extend at an incline to the left and upward from the protrusion 311. The first right rib 312b and the second right rib 313b both extend at an incline outward and upward in the vehicle width direction from the protrusion 311. Specifically, the first right rib 312b and the second right rib 313b both extend at an incline to the right and upward from the protrusion 311. The first left rib 312a and the second left rib 313a both extend at an incline rearward and upward from the protrusion 311, as shown in FIG. 2. The first right rib 312b is disposed in bilateral symmetry with the first left rib 312a. The second right rib 313b is disposed in bilateral symmetry with the second left rib 313a. Consequently, the first right rib 312b and the second right rib 313b both extend at an incline rearward and upward from the protrusion 311. The second left rib 313a is positioned below the first left rib 312a. The second right rib 313b is positioned below the first right rib 312b.

The front cover assembly 30 includes a headlight 35. The headlight 35 is attached to the first cover member 31. Specifically, the headlight 35 is attached to the protrusion 311. An opening 316 is formed in the front surface of the protrusion 311 as shown in FIG. 3. The opening 316 is circular. The headlight 35 is disposed inside the opening 316 of the protrusion 311. A position light 38 and a position light cover 39 are disposed above the headlight 35 as seen from the front. The position light 38 and the position light cover 39 are positioned above the protrusion 311. The position light 38 is disposed in the middle of the first cover member 31 in the vehicle width direction. The position light 38 is attached to the position light cover 39. The position light cover 39 is a separate member from the front cover assembly 30. The position light cover 39 is attached to the first cover member 31. The position light cover 39 is disposed in front of the first cover member 31.

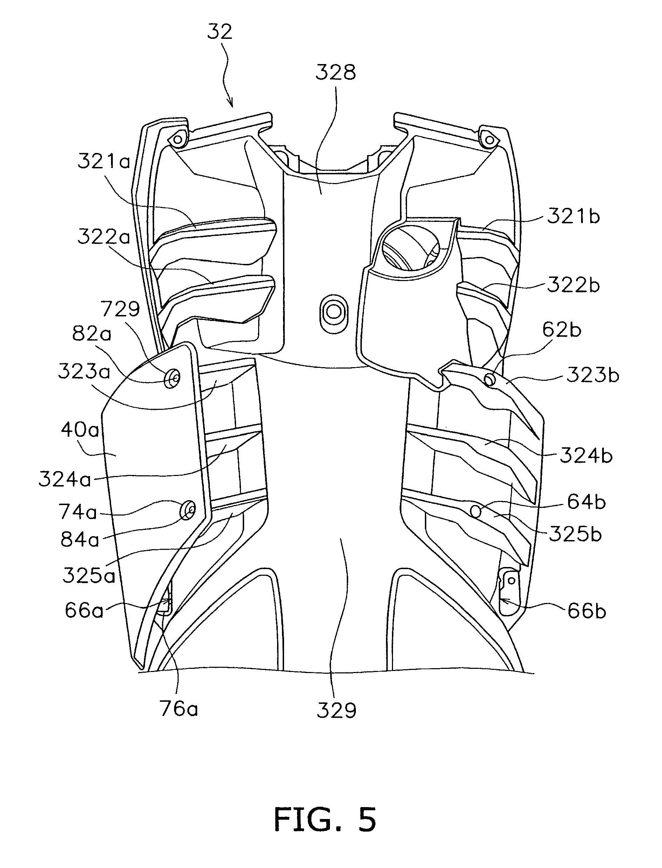

The second cover member 32 covers at least the head pipe portion 21 from the rear. Specifically, the second cover member 32 covers the head pipe portion 21 and the down frame portion 22 from the rear. The second cover member 32 is attached to the first cover member 31. FIG. 5 is a rear view of the second cover member 32. FIG. 5 shows a state in which only a left separate cover 40a, described hereinafter, is attached to the front cover assembly 30. The second cover member 32 includes a plurality of protuberances 321a to 325a and 321b to 325b, as shown in FIG. 5. The protuberances 321a to 325a and 321b to 325b are spaced apart from each other. Specifically, the second cover member 32 includes a plurality of left top protuberances 321a and 322a, and a plurality of right top protuberances 321b and 322b. More specifically, the second cover member 32 includes two left top protuberances 321a and 322a and two right top protuberances 321b and 322b. The left top protuberance 321a and the right top protuberance 321b are spaced apart from each other in the left-right direction. The left top protuberance 322a and the right top protuberance 322b are spaced apart from each other in the left-right direction. The left top protuberances 321a and 322a are spaced apart from each other in the up-down direction. The right top protuberances 321b and 322b are spaced apart from each other in the up-down direction. The second cover member 32 includes a middle top portion 328. The middle top portion 328 is positioned between the left top protuberance 321a and the right top protuberance 321b in the vehicle width direction, and also between the left top protuberance 322a and the right top protuberance 322b. The middle top portion 328 protrudes farther rearward than the left top protuberances 321a and 322a and the right top protuberances 321b and 322b. The middle top portion 328 is positioned rearward of the above-described head pipe portion 21 as shown in FIG. 2.

The second cover member 32 includes a plurality of left bottom protuberances 323a to 325a and a plurality of right bottom protuberances 323b to 325b, as shown in FIG. 5. Specifically, the second cover member 32 includes three left bottom protuberances 323a to 325a and three right bottom protuberances 323b to 325b. The left bottom protuberances 323a to 325a and the right bottom protuberances 323b to 325b are spaced apart from each other in the left-right direction. The left bottom protuberances 323a to 325a are spaced apart from each other in the up-down direction. The right bottom protuberances 323b to 325b are spaced apart from each other in the up-down direction. The second cover member 32 includes a middle bottom portion 329. The middle bottom portion 329 is positioned between the left bottom protuberances 323a to 325a and the right bottom protuberances 323b to 325b in the vehicle width direction. The middle bottom portion 329 protrudes farther rearward than the left bottom protuberances 323a to 325a and the right bottom protuberances 323b to 325b. The middle bottom portion 329 is positioned rearward of the down frame portion 22 described above.

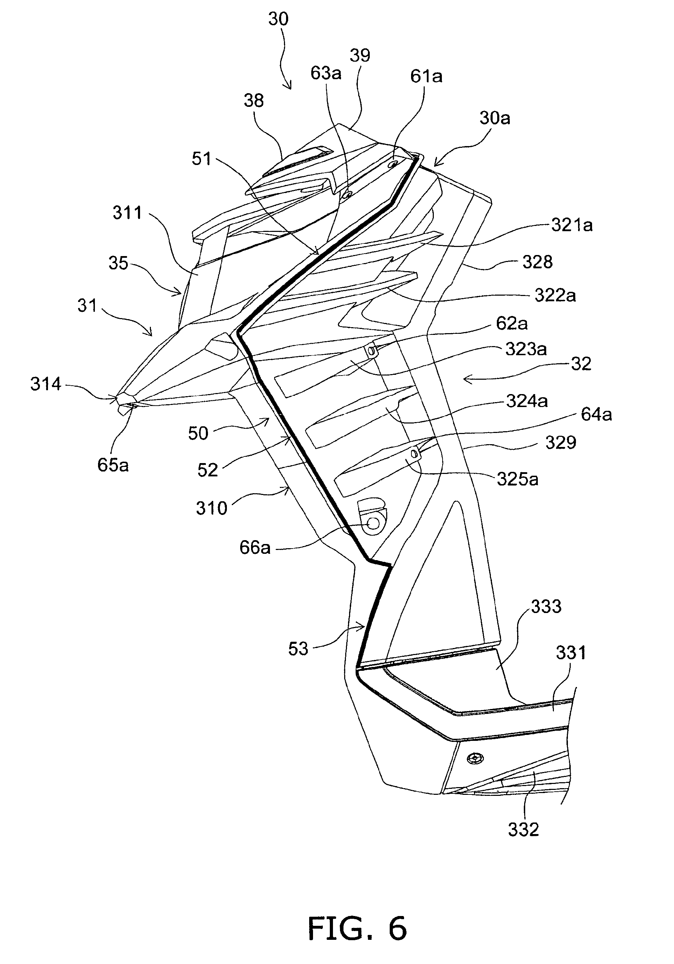

FIG. 6 is a left side view of the front cover assembly 30 without the separate cover 40 attached. With the separate cover 40 not attached as shown in FIG. 6, the border 50 between the first cover member 31 and the second cover member 32 is visible in a side view. In FIG. 6, the border 50 is emphasized in order to make it more discernible. In a side view, the border 50 includes a crooked shape. The border 50 includes a first border portion 51, a second border portion 52, and a third border portion 53. The top end of the first border portion 51 reaches a top surface 30a of the front cover assembly 30. The first border portion 51 is inclined forward and downward. The first border portion 51 is positioned in front of the left top protuberances 321a and 322a. The bottom end of the first border portion 51 is positioned above a front end portion 314 of the first cover member 31. The top end of the second border portion 52 continues into the bottom end of the first border portion 51. The second border portion 52 is inclined rearward and downward. The second border portion 52 is positioned in front of the left bottom protuberances 323a to 325a. The bottom end of the second border portion 52 is positioned below the front end portion 314 of the first cover member 31. The bottom end of the second border portion 52 is positioned rearward of the concave portion 310. The top end of the third border portion 53 continues into the bottom end of the second border portion 52. The third border portion 53 is inclined forward and downward.

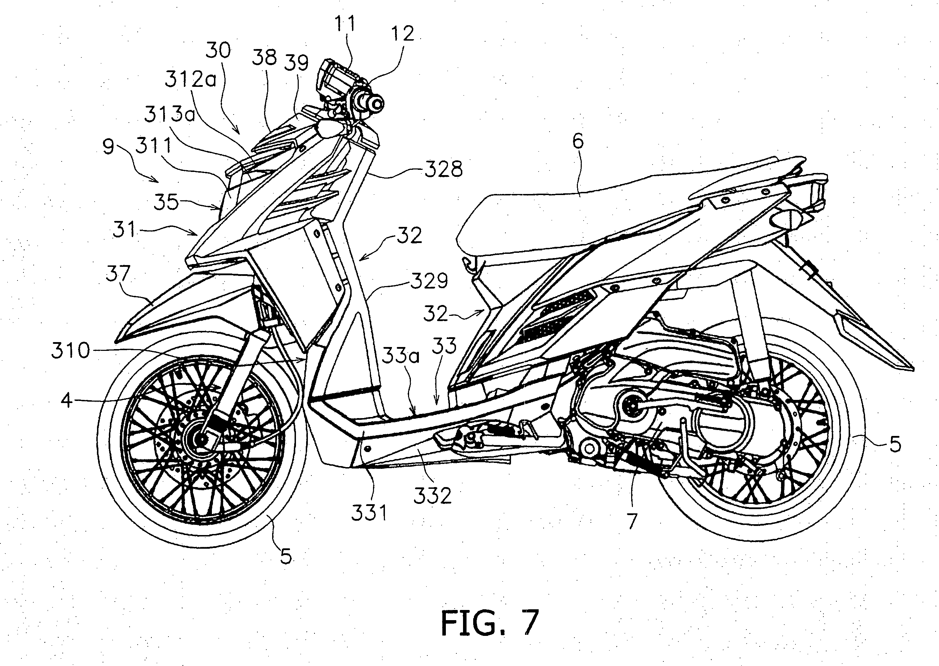

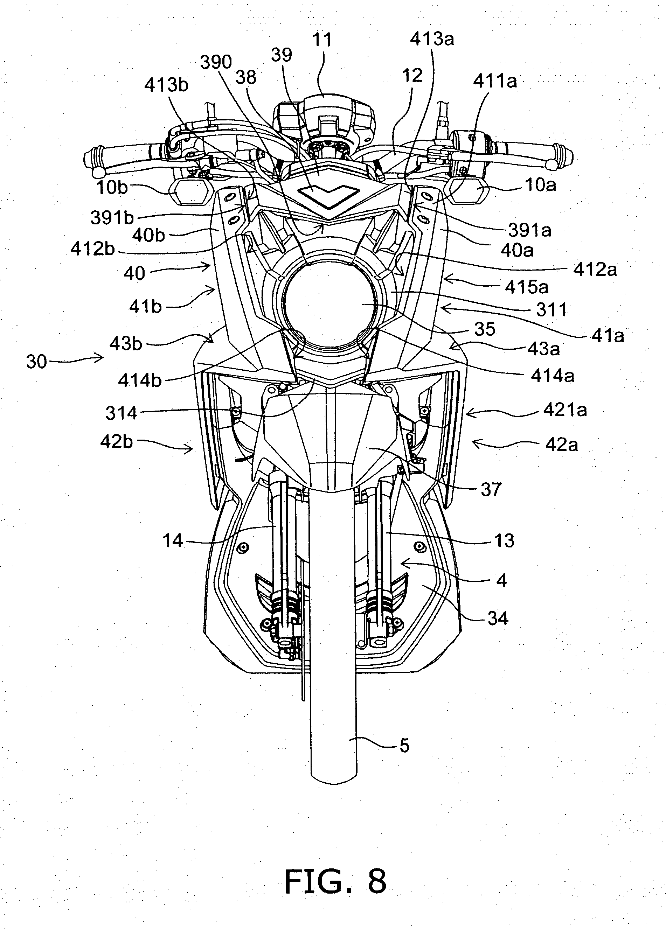

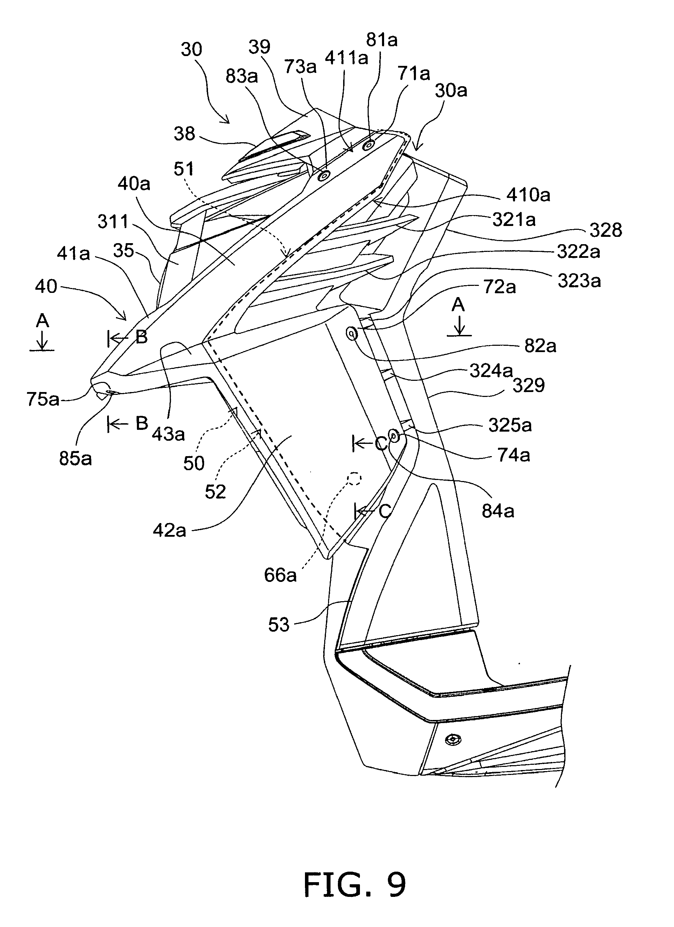

The separate cover 40 can be attached to and removed from the front cover assembly 30 as shown in FIG. 1. The separate cover 40 is a component formed separate from the front cover assembly 30. FIG. 7 is a left side view of the saddle-ride type vehicle with the separate cover 40 attached. FIG. 8 is a front view of the saddle-ride type vehicle with the separate cover 40 attached. FIG. 9 is a left side view of the front cover assembly 30 with the separate cover 40 attached. The separate cover 40 covers at least portion of the border 50 between the first cover member 31 and the second cover member 32, as shown in FIG. 9. Specifically, the separate cover 40 covers the first border portion 51 and the second border portion 52 from the side. The separate cover 40 includes the left separate cover 40a and a right separate cover 40b as shown in FIGS. 1 and 8. When attached to the front cover assembly 30, the left separate cover 40a and the right separate cover 40b are separated apart from each other in the vehicle width direction.

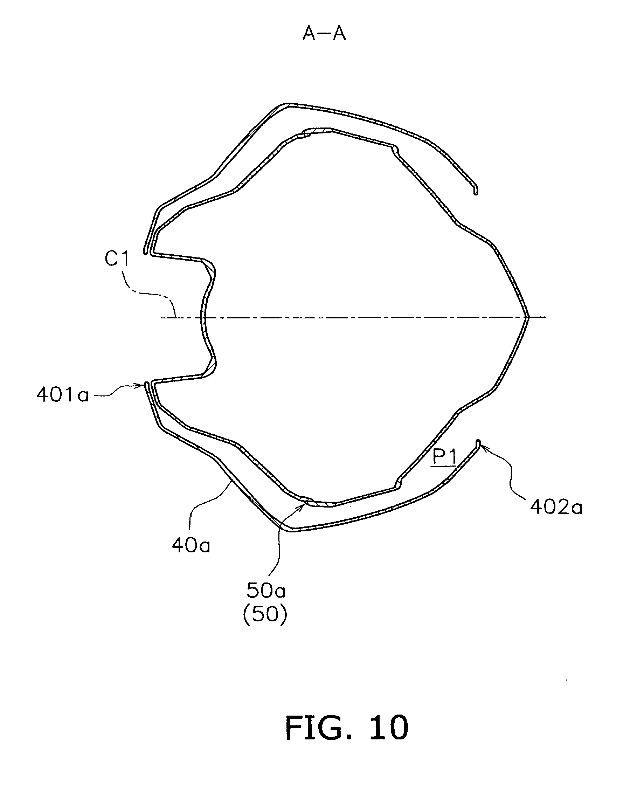

FIG. 10 is a cross-sectional view along line A-A in FIG. 9. The left separate cover 40a includes a shape in which the front and rear ends of the left separate cover 40a are curved so as to be positioned nearer a center line C1 in the vehicle width direction of the vehicle than the border 50, as shown in FIG. 10. An air passage P1 through which air passes is formed between the left separate cover 40a and the front cover assembly 30. The air passage P1 is formed between the recesses between the left bottom protuberances 323a to 325a, and the left separate cover 40a. The border 50 between the first cover member 31 and the second cover member 32 includes an outermost portion 50a. The outermost portion 50a is the portion that is positioned farthest outward in the vehicle width direction. At least portion of the left separate cover 40a is positioned farther inward in the vehicle width direction than the outermost portion 50a of the border 50. Specifically, in a cross-sectional view, a front end 401a of the left separate cover 40a is positioned farther forward and inward in the vehicle width direction than the outermost portion 50a of the border 50. In a cross-sectional view, a rear end 402a of the left separate cover 40a is positioned farther rearward and inward in the vehicle width direction than the outermost portion 50a of the border 50.

The left separate cover 40a includes a cover top portion 41a, a cover bottom portion 42a, and a ridge portion 43a, as shown in FIG. 9. The cover top portion 41a includes a shape that extends at a downward and forward slant in a side view. The top end of the cover top portion 41a reaches the top surface 30a of the front cover assembly 30. The front end of the cover top portion 41a covers the left side of the front end portion 314 (see FIG. 6) of the front cover assembly 30. The cover top portion 41a covers the first border portion 51 from the side. The cover top portion 41a covers the front portions of the left top protuberances 321a and 322a from the side. A rear edge portion 410a of the cover top portion 41a is inclined at a downward and forward slant. A front surface 411a of the cover top portion 41a is inclined at a downward and forward slant. The inner edge portion of the front surface 411a of the cover top portion 41a includes a recess 412a, a top inner edge portion 413a, and a bottom inner edge portion 414a, as shown in FIG. 8. The recess 412a is disposed between the top inner edge portion 413a and the bottom inner edge portion 414a. An outside surface 415a of the cover top portion 41a is inclined downward and inward in the vehicle width direction in a front view.

The cover bottom portion 42a is disposed below the cover top portion 41a as shown in FIG. 9. The cover bottom portion 42a covers the second border portion 52 from the side. The cover bottom portion 42a covers the left bottom protuberances 323a to 325a from the side. An outside surface 421a of the cover bottom portion 42a is inclined downward and inward in the vehicle width direction in a front view, as shown in FIG. 8. The ridge portion 43a is positioned between the cover top portion 41a and the cover bottom portion 42a. The ridge portion 43a protrudes outward in the vehicle width direction from the bottom end of the cover top portion 41a. The ridge portion 43a is inclined rearward and upward as shown in FIG. 9.

The right separate cover 40b includes a cover top portion 41b, a cover bottom portion 42b, and a ridge portion 43b, as shown in FIG. 8. The cover top portion 41b of the right separate cover 40b is disposed in bilaterally symmetry with the cover top portion 41a of the left separate cover 40a. The cover bottom portion 42b of the right separate cover 40b is disposed in bilateral symmetry with the cover bottom portion 42a of the left separate cover 40a. The ridge portion 43b of the right separate cover 40b is disposed in bilateral symmetry with the ridge portion 43a of the left separate cover 40a. The configuration of the right separate cover 40b is identical to the configuration of the left separate cover 40a except that it is disposed in bilateral symmetry with the left separate cover 40a, and the configuration of the right separate cover 40b is therefore not described in detail.

The protrusion 311 described above is disposed so as to protrude forward through an opening enclosed by the recess 412a of the left separate cover 40a, a recess 412b of the right separate cover 40b, and a bottom edge portion 390 of the position light cover 39. The top inner edge portion 413a of the left separate cover 40a is disposed along a left side edge portion 391a of the position light cover 39. A top inner edge portion 413b of the right separate cover 40b is disposed along a right side edge portion 391b of the position light cover 39. The bottom inner edge portion 414a of the left separate cover 40a and a bottom inner edge portion 414b of the right separate cover 40b are spaced apart from each other in the vehicle width direction. The middle of the front end portion 314 of the first cover member 31 is disposed between the bottom inner edge portion 414a of the left separate cover 40a and the bottom inner edge portion 414b of the right separate cover 40b.

The front cover assembly 30 includes a plurality of securing portions for attaching the separate cover 40 to the front cover assembly 30. The securing portions are through-holes formed in the front cover assembly 30. Specifically, the front cover assembly 30 includes a first left securing portion 61a and a second left securing portion 62a as shown in FIG. 6. The first left securing portion 61a is provided to the first cover member 31. The second left securing portion 62a is provided to the second cover member 32. Consequently, the border 50 between the first cover member 31 and the second cover member 32 is disposed between the first left securing portion 61a and the second left securing portion 62a. Specifically, the first left securing portion 61a and the second left securing portion 62a are provided to separate members on either side of the border 50. The front cover assembly 30 includes a third left securing portion 63a and a fourth left securing portion 64a. The third left securing portion 63a is provided to the first cover member 31. The fourth left securing portion 64a is provided to the second cover member 32. Consequently, the border 50 is disposed between the third left securing portion 63a and the fourth left securing portion 64a. Specifically, the third left securing portion 63a and the fourth left securing portion 64a are provided to separate members on either side of the border 50. The first left securing portion 61a and the third left securing portion 63a are spaced apart from each other in the forward-backward direction. The first left securing portion 61a and the third left securing portion 63a are spaced apart from each other in the up-down direction. The second left securing portion 62a and the fourth left securing portion 64a are formed in the peaks of the left bottom protuberances 323a and 325a, respectively. Through-holes 71a to 74a are formed in the left separate cover 40a as shown in FIG. 9. The through-holes 71a to 74a of the left separate cover 40a are disposed at positions facing the left securing portions 61a to 64a (see FIG. 6) of the front cover assembly 30, respectively. A securing member 81a is inserted through the through-hole 71a of the left separate cover 40a and the through-hole of the first left securing portion 61a of the front cover assembly 30. A securing member 82a is inserted through the through-hole 72a of the left separate cover 40a and the through-hole of the second left securing portion 62a of the front cover assembly 30. A securing member 83a is inserted through the through-hole 73a of the left separate cover 40a and the through-hole of the third left securing portion 63a of the front cover assembly 30. A securing member 84a is inserted through the through-hole 74a of the left separate cover 40a and the through-hole of the fourth left securing portion 64a of the front cover assembly 30. The left separate cover 40a is thereby attached to the front cover assembly 30. The securing members 81a to 84a are screws, for example. The securing members 81a to 84a are inserted from the through-holes 71a to 74a of the left separate cover 40a toward the through-holes of the left securing portions 61a to 64a of the front cover assembly 30, respectively.

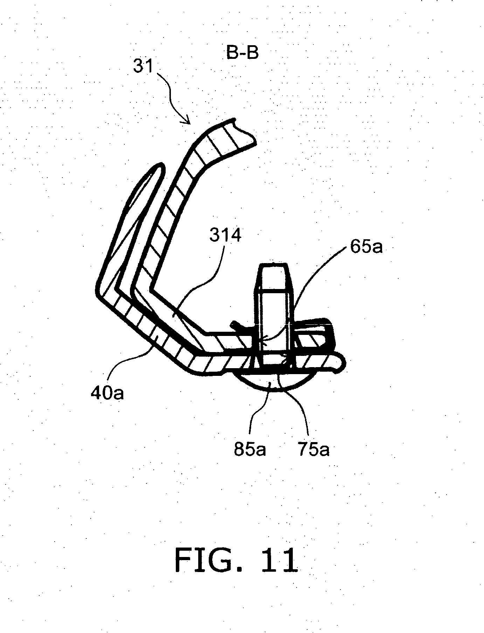

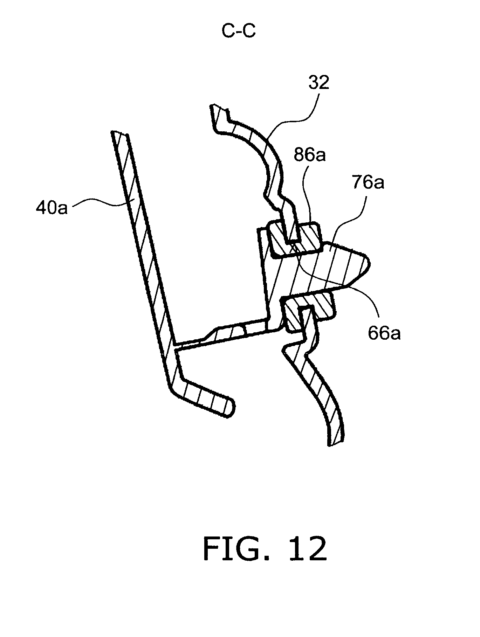

The front cover assembly 30 includes a left front securing portion 65a as shown in FIG. 6. The left front securing portion 65a is formed in the left side portion of the front end portion 314 of the first cover member 31. The left front securing portion 65a is positioned forward of the first left securing portion 61a and the second left securing portion 62a. The left front securing portion 65a is positioned forward of the third left securing portion 63a and the fourth left securing portion 64a. FIG. 11 is a cross-sectional view along line B-B in FIG. 9. The left separate cover 40a includes a through-hole 75a as shown in FIG. 11. The through-hole 75a of the left separate cover 40a is disposed in a position facing the left front securing portion 65a. A securing member 85a, which is a screw or the like, is inserted through the through-hole 75a of the left separate cover 40a and the through-hole of the left front securing portion 65a, whereby the left separate cover 40a is attached to the front cover assembly 30. The securing member 85a is inserted from the through-hole 75a of the left separate cover 40a toward the through-hole of the left front securing portion 65a. Furthermore, the front cover assembly 30 includes a left bottom securing portion 66a as shown in FIG. 6. The left bottom securing portion 66a is formed in the bottom portion of the second cover member 32. The left bottom securing portion 66a is positioned below the first left securing portion 61a and the second left securing portion 62a. The left bottom securing portion 66a is positioned below the third left securing portion 63a and the fourth left securing portion 64a. FIG. 12 is a cross-sectional view along line C-C in FIG. 9. The left separate cover 40a includes a protuberance 76a as shown in FIG. 12. The protuberance 76a of the left separate cover 40a is disposed in a position facing the left bottom securing portion 66a. The protuberance 76a of the left separate cover 40a protrudes inward in the vehicle width direction from the inner surface of the left separate cover 40a. The protuberance 76a of the left separate cover 40a is inserted in the through-hole of the left bottom securing portion 66a via an elastic member 86a, whereby the left separate cover 40a is attached to the front cover assembly 30.

The front cover assembly 30 includes a first right securing portion 61b as shown in FIG. 3. The first right securing portion 61b is provided to the first cover member 31. The first right securing portion 61b is disposed in bilateral symmetry with the first left securing portion 61a. The front cover assembly 30 also includes a third right securing portion 63b. The third right securing portion 63b is provided to the first cover member 31. The third right securing portion 63b is disposed in bilateral symmetry with the third left securing portion 63a. The front cover assembly 30 includes a second right securing portion 62b as shown in FIG. 5. The second right securing portion 62b is provided to the second cover member 32. The second right securing portion 62b is disposed in bilateral symmetry with the second left securing portion 62a. The front cover assembly 30 also includes a fourth right securing portion 64b. The fourth right securing portion 64b is provided to the second cover member 32. The fourth right securing portion 64b is disposed in bilateral symmetry with the fourth left securing portion 64a. Though not shown in the drawings, the front cover assembly 30 includes a right front securing portion disposed in bilateral symmetry with the left front securing portion 65a. The front cover assembly 30 also includes a right bottom securing portion disposed in bilateral symmetry with the left bottom securing portion 66a. Other than being disposed in bilateral symmetry with the first through fourth left securing portions 61a to 64a, the left front securing portion 65a, and the left bottom securing portion 66a, the first through fourth right securing portions 61b to 64b, the right front securing portion, and the right bottom securing portion have the same configurations and are therefore not described.

The saddle-ride type vehicle 1 according to the present embodiment has the following characteristics.

The rider of the saddle-ride type vehicle 1 can easily attach the separate cover 40 to the saddle-ride type vehicle 1. The rider can also easily remove the separate cover 40 from the saddle-ride type vehicle 1. Consequently, the rider can travel having made the desired selection between a saddle-ride type vehicle 1 that has the separate cover 40 attached and a saddle-ride type vehicle 1 that has the separate cover 40 removed. When the saddle-ride type vehicle 1 without the separate cover 40 attached is used, closing members composed of screws or elastic materials are preferably attached in the through-holes of the securing portions described above.

The border 50 between the first cover member 31 and the second cover member 32 is disposed between the first left securing portion 61a and the second left securing portion 62a. Specifically, the first left securing portion 61a and the second left securing portion 62a are provided to separate members on either side of the border 50. Consequently, the border 50 appearing in the left side surface of the front cover assembly 30 is covered by the left separate cover 40a. Therefore, water can be suppressed from falling directly onto the border 50. Water can thereby be suppressed from seeping through the seam between the first cover member 31 and the second cover member 32. The headlight 35 is attached to the first cover member 31, but water can be suppressed from reaching the interior of the headlight 35. Furthermore, since the headlight 35 is attached to the protrusion 311, the distance from the border 50 to the headlight 35 can be increased. It is thereby possible to suppress water from reaching the headlight 35 even when water has seeped into the front cover assembly 30 through the border 50. The position light cover 39 is a separate member from the front cover assembly 30 and is disposed in front of the first cover member 31. Therefore, the distance from the border 50 to the position light 38 can be increased. Water can thereby be suppressed from reaching the position light 38 even when water has seeped into the front cover assembly 30 through the border 50.

Because the left and right separate covers 40a and 40b are secured respectively to the first cover member 31 and the second cover member 32, the separate covers 40a and 40b can be secured more firmly in comparison with cases in which they are secured to only one cover member. Abnormal noises caused by unintended vibrations of the separate covers 40a and 40b can thereby be prevented. The separate covers 40a and 40b can also be made thinner and lighter.

The border 50 between the first cover member 31 and the second cover member 32 is disposed in a position where it is visible when viewing the vehicle from the side. Because at least portion of the border 50 disposed in such a position is covered by the separate cover 40, the air flowing past the side of the front cover assembly 30 can be suppressed from detaching from the surface of the front cover assembly 30 in the border 50. It is thereby possible to suppress increases of air resistance and occurrences of wind noise.

The securing members 81a to 84a are inserted through the through-holes 71a to 74a formed in the left separate cover 40a and the through-holes of the left securing portions 61a to 64a formed in the front cover assembly 30. In this case, the securing members 81a to 84a can be inserted through the through-holes from the outer side of the left separate cover 40a. The left separate cover 40a can thereby be easily attached to the front cover assembly 30. The right separate cover 40b can also be easily attached to the front cover assembly 30 in the same manner as the left separate cover 40a.

The rigidity of the second cover member 32 can be improved by forming the protuberances 321a to 325a on the second cover member 32. The left securing portions 62a to 64a are formed in the peaks of the left bottom protuberances 323a to 325a, respectively. Therefore, the attachment strength of the separate cover 40 can be improved. Furthermore, the spaces between the separate cover 40 and the recesses between the left bottom protuberances 323a to 325a can be utilized as the air passage P1.

The front end 401a and the rear end 402a of the separate cover 40 are disposed at positions distanced from the border 50. The front end 401a and the rear end 402a of the separate cover 40 are also disposed farther inward in the vehicle width direction than the border 50. Water can thereby be further suppressed from seeping in through the border 50. The front end 401a and the rear end 402a of the separate cover 40 are also positioned farther inward in the vehicle width direction than the outermost portion 50a of the border 50. Consequently, it is possible to more reliably prevent water from seeping into the front cover assembly 30 from a direction slanted in relation to the border 50 in the side of the front cover assembly 30.

A border similar to the border 50 described above appears in the right side surface of the front cover assembly 30. This border in the right side surface is covered by the right separate cover 40b and is thereby protected in the same manner as the border 50.

Because the ribs 312a, 313a, 312b, and 313b are formed in the first cover member 31, the rigidity of the protrusion 311 can be improved. Particularly, the rigidity with which the headlight 35 is supported by the protrusion 311 can be improved.

An embodiment of the present invention was described above, but the present invention is not limited to the above embodiment, and various modifications can be made within a range that does not deviate from the scope of the invention as defined in the appended claims.

The saddle-ride type vehicle is not limited to a motorcycle, and includes three-wheeled vehicles, all-terrain vehicles, and snowmobiles. The motorcycle is also not limited to a scooter, and includes mopeds and sports type motorcycles.

In the embodiment described above, the separate cover 40 covers the border 50 between the first cover member 31 and the second cover member 32 into which the front cover assembly 30 is divided front-to-back.

In the above embodiment, the separate cover 40 includes the left and right separate covers 40a and 40b. Specifically, the separate cover 40 includes a plurality of separate components. However, the separate cover 40 may be a single component formed integrally.

In the above embodiment, both the front end 401a and the rear end 402a of the separate cover 40 are positioned nearer to the center line in the vehicle width direction of the vehicle than the border 50. However, another option is for either only the front end or only the rear end of the separate cover 40 to be positioned nearer to the center line in the vehicle width direction of the vehicle than the border 50. Yet another option is for neither the front end nor the rear end of the separate cover 40 to be positioned nearer to the center line in the vehicle width direction of the vehicle than the border 50. To prevent water from falling directly onto the border 50, both the front end and the rear end of the separate cover 40 are preferably positioned nearer to the center line in the vehicle width direction of the vehicle than the border 50, as in the above embodiment.

The securing portions are not limited to through-holes, and may be configured as holes that are not formed all the way through, or as protuberances or some other form. The number and placement of securing portions are not limited to the number and placement in the above embodiment. The securing portions are not limited to being formed in the protuberances and may be formed in other portions. Another option is that protuberances not be formed on the front cover assembly 30. However, protuberances are preferably formed in order to improve the rigidity of the cover members.

The protrusion 311 to which the headlight 35 is attached may be omitted. Alternatively, the ribs 312a, 313a, 312b, and 313b connected to the protrusion 311 may be omitted. However, the protrusion 311 is preferably provided in order to ensure a large distance from the border 50 to the headlight 35. The ribs 312a, 313a, 312b, and 313b are also preferably formed in order to improve the rigidity of the protrusion 311.

The position light cover 39 may be formed integrally with the front cover assembly 30. However, the position light cover 39 is preferably separate from the front cover assembly 30 and is preferably disposed forward of the first cover member 31 in order to impede water from reaching the position light 38 inside the front cover assembly 30 through the border 50.

## Claims

1. A saddle-ride type vehicle (1) comprising:
a head pipe (21); and
a front cover assembly(30) for covering the head pipe (21), the front cover assembly(30) including a plurality of cover members (31, 32); wherein
the front cover assembly (30) includes a plurality of securing portions (61 a, 62a, 63a, 64a, 65a, 66a, 61 b, 62b, 63b, 64b) for attaching a separate cover (40) to the front cover assembly (30), the separate cover (40) being formed separately from the front cover assembly(30); and
the securing portions (61a, 62a, 63a, 64a, 65a, 66a, 61 b, 62b, 63b, 64b) include a first securing portion (61a, 61b) and a second securing portion (62a, 62b),
wherein the front cover assembly(30) includes a headlight(35),
the cover members (31, 32) include:
a first cover member (31) for covering at least the front of the head pipe (21), the headlight (35) being attached to the first cover member (31),
a second cover member (32) attached to the first cover member (31);
**characterized in that** the border (50) between the first cover member (31) and the second cover member (32) is disposed between the first securing portion (61a, 61 b) and the second securing portion (62a, 62b) the separate cover (40) covers at least portion of the border (50) between the first cover member (31) and the second cover member (32),
wherein the border (50) between the first cover member (31) and the second cover member (32) is in a position where it is visible in a side view of the vehicle.

2. A saddle-ride type vehicle according to claim 1,
wherein
the first securing portion (61a, 61 b) secures the separate cover (40) and the first cover member (31) together; and
the second securing portion (62a, 62b) secures the separate cover (40) and the second cover member (32) together.

3. A saddle-ride type vehicle according to one of the claims 1 to 2,
wherein the separate cover (40) includes a crooked shape such that the front end and/or rear end of the separate cover (40) is positioned nearer to the center line of the vehicle (1) in the vehicle width direction than the border (50).

4. A saddle-ride type vehicle according to one of the claims 1 to 3,
wherein the border (50) between the first and second cover members (31, 32) includes an outermost portion (50a) positioned farthest outward in the vehicle width direction, and
at least portion of the separate cover (40) is positioned farther inward in the vehicle width direction than the outermost portion (50a) of the border (50).

5. A saddle-ride type vehicle according to one of the claims 1 to 4,
wherein the securing portions (61a, 62a, 63a, 64a, 65a, 66a, 61b, 62b, 63b, 64b) include a through-hole formed in the front cover assembly (30),
the separate cover (40) includes a through-hole (71a, 72a, 73a, 74a, 75a) formed in a position that faces the through-hole of the front cover assembly (30), and
a securing member (81, 82a, 83a, 84a, 85a) is inserted into the through-hole of the front cover assembly(30) and the through-hole (71 a, 72a, 73a, 74a, 75a) of the separate cover (40), whereby the separate cover (40) is attached to the front cover assembly (30).

6. A saddle-ride type vehicle according to claim 5,
wherein the securing member (81, 82a, 83a, 84a, 85a) is inserted from the through-hole (71a, 72a, 73a, 74a, 75a) of the separate cover (40) toward the through-hole of the front cover assembly (30).

7. A saddle-ride type vehicle according to one of the claims 1 to 6,
wherein the front cover assembly (30) includes a plurality of protuberances (321a, 322a, 323a, 324a, 325a, 321 b, 322b, 323b, 324b, 325b) spaced apart from each other.

8. A saddle-ride type vehicle according to claim 7,
wherein at least some of the securing portions (61a, 62a, 63a, 64a, 65a, 66a, 61b, 62b, 63b, 64b) are formed in the peaks of the protuberances (321a, 322a, 323a, 324a, 325a, 321b, 322b, 323b, 324b, 325b).

9. A saddle-ride type vehicle according to one of the claims 1 to 8,
wherein an air passage (P1) through which air passes is formed between the separate cover (40) and the front cover assembly (30).

10. A saddle-ride type vehicle according to claim 9,
wherein the front cover assembly (30) includesa plurality of protuberances (321 a322a, 323a, 324a, 325a, 321 b, 322b, 323b, 324b, 325b) spaced apart from each other, and the air passage (P1) is formed between the separate cover (40) and recesses between the protuberances (321 a, 322a, 323a, 324a, 325a, 321 b, 322b, 323b, 324b, 325b).

11. A saddle-ride type vehicle according to one of the claims 1 to 10,
wherein the first cover member (31) includes a protrusion (311) that protrudes forward, and
the headlight (35) is attached to the protrusion (311).

12. A saddle-ride type vehicle according to claim 11,
wherein the first cover member (31) includes a rib (312a, 313a, 312b, 313b) connected to the protrusion (311).

13. A saddle-ride type vehicle according to one of the claims 1 to 12, further comprising:
a position light(38), and
a position light cover (39) to which the position light(38) is attached;
the position light cover (39) being separate from the front cover assembly (30) and disposed in front of the first cover member (31).

## Patentansprüche

1. Sattelfahrzeug (1), umfassend:
ein Kopfrohr (21); und
eine vordere Abdeckungsbaugruppe (30) zum Abdecken des Kopfrohrs (21), wobei die vordere Abdeckungsbaugruppe (30) eine Vielzahl von Abdeckungselementen (31, 32) beinhaltet; wobei
die vordere Abdeckungsbaugruppe (30) eine Vielzahl von Befestigungsteilen (61 a, 62a, 63a, 64a, 65a, 66a, 61 b, 62b, 63b, 64b) zum Befestigen einer separaten Abdeckung (40) an der vorderen Abdeckungsbaugruppe (30) aufweist, wobei die separate Abdeckung (40) separat von der vorderen Abdeckungsbaugruppe (30) ausgebildet ist; und
die Befestigungsteile (61 a, 62a, 63a, 64a, 65a, 66a, 61 b, 62b, 63b, 64b) einen ersten Befestigungsteil (61 a, 61 b) und einen zweiten Befestigungsteil (62a, 62b) beinhalten,
wobei die vordere Abdeckungsbaugruppe (30) einen Scheinwerfer (35) beinhaltet, und die Abdeckungselemente (31, 32) aufweisen:
ein erstes Abdeckungselement (31) zum Abdecken von zumindest der Vorderseite des Kopfrohrs (21), wobei der Scheinwerfer (35) an dem ersten Abdeckungselement (31) befestigt ist,
ein zweites Abdeckungselement (32), das einem ersten Abdeckungselement (31) befestigt ist;
**dadurch gekennzeichnet, dass** die Leiste (50) zwischen dem ersten Abdeckungselement (31) und dem zweiten Abdeckungselement (32) zwischen dem ersten Befestigungsteil (61 a, 61 b) und dem zweiten Befestigungsteil (62a, 62b) angeordnet ist, wobei die separate Abdeckung (40) zumindest einen Teil der Leiste (50) zwischen dem ersten Abdeckungselement (31) und dem zweiten Abdeckungselement (32) bedeckt,
wobei die Leiste (50) zwischen dem ersten Abdeckungselement (31) und dem zweiten Abdeckungselement (32) an einer Position ist, an der sie in einer Seitenansicht des Fahrzeugs sichtbar ist.

2. Sattelfahrzeug nach Anspruch 1,
wobei der erste Befestigungsteil (61 a, 61 b) die separate Abdeckung (40) und das erste Abdeckungselement (31) aneinander befestigt; und
der zweite Befestigungsteil (62a, 62b) die separate Abdeckung (40) und das zweite Abdeckungselement (32) aneinander befestigt.

3. Sattelfahrzeug nach einem der Ansprüche 1 bis 2,
wobei die separate Abdeckung (40) eine gekrümmte Form aufweist, so dass das vordere Ende und/oder das hintere Ende der separaten Abdeckung (40) näher an der Mittellinie des Fahrzeugs (1) in Richtung der Fahrzeugbreite angeordnet sind, als die Leiste (50).

4. Sattelfahrzeug nach einem der Ansprüche 1 bis 3,
wobei die Leiste (50) zwischen dem ersten und zweiten Abdeckungselement (31, 32) einen äußersten Teil (50a) aufweist, der in Richtung der Fahrzeugbreite am weitesten außen positioniert ist, und
mindestens ein Teil der separaten Abdeckung (40) in Richtung der Fahrzeugbreite weiter innen als der äußerste Teil (50a) der Leiste (50) angeordnet ist.

5. Sattelfahrzeug nach einem der Ansprüche 1 bis 4,
wobei die Befestigungsteile (61 a, 62a, 63a, 64a, 65a, 66a, 61 b, 62b, 63b, 64b) eine Durchgangsöffnung aufweisen, die in der vorderen Abdeckungsbaugruppe (30) ausgebildet ist,
die separate Abdeckung (40) eine Durchgangsöffnung (71 a, 72a, 73a, 74a, 75a) aufweist, die an einer Position gegenüber der Durchgangsöffnung der vorderen Abdeckungsbaugruppe (30) ausgebildet ist, und
ein Befestigungselement (81, 82a, 83a, 84a, 85a) in die Durchgangsöffnung der vorderen Abdeckungsbaugruppe (30) und die Durchgangsöffnung (71a, 72a, 73a, 74a, 75a) der separaten Abdeckung (40) eingesetzt ist, so dass die separate Abdeckung (40) an der vorderen Abdeckungsbaugruppe (30) befestigt ist.

6. Sattelfahrzeug nach Anspruch 5,
wobei das Befestigungselement (81, 82a, 83a, 84a, 85a) von der Durchgangsöffnung (71 a, 72a, 73a, 74a, 75a) der separaten Abdeckung (40) in Richtung der Durchgangsöffnung der vorderen Abdeckungsbaugruppe (30) eingesetzt ist.

7. Sattelfahrzeug nach einem der Ansprüche 1 bis 6,
wobei die vordere Abdeckungsbaugruppe (30) eine Vielzahl von Ausstülpungen (321a, 322a, 323a, 324a, 325a, 321 b, 322b, 323b, 324b, 325b) aufweist, die einander beabstanden.

8. Sattelfahrzeug nach Anspruch 7,
wobei mindestens einige der Befestigungsteile (61 a, 62a, 63a, 64a, 65a, 66a, 61 b, 62b, 63b, 64b) an den höchsten Stellen der Ausstülpungen (321 a, 322a, 323a, 324a, 325a, 321 b, 322b, 323b, 324b, 325b) ausgebildet sind.

9. Sattelfahrzeug nach einem der Ansprüche 1 bis 8,
wobei ein Luftkanal (P1), durch den Luft hindurchgeht, zwischen der separaten Abdeckung (40) und der vorderen Abdeckungsbaugruppe (30) ausgebildet ist.

10. Sattelfahrzeug nach Anspruch 9,
wobei die vordere Abdeckungsbaugruppe (30) eine Vielzahl von Ausstülpungen (321 a, 322a, 323a, 324a, 325a, 321 b, 322b, 323b, 324b, 325b) aufweist, die einander beabstanden, und der Luftkanal (P1) zwischen der separaten Abdeckung (40) und Vertiefungen zwischen den Ausstülpungen (321 a, 322a, 323a, 324a, 325a, 321 b, 322b, 323b, 324b, 325b) ausgebildet ist.

11. Sattelfahrzeug nach einem der Ansprüche 1 bis 10,
wobei das erste Abdeckungselement (31) einen Vorsprung (311 aufweist, der nach vorne vorsteht, und
der Scheinwerfer (35) an dem Vorsprung (311) befestigt ist.

12. Sattelfahrzeug nach Anspruch 11,
wobei das erste Abdeckungselement (31) eine Rippe (312a, 313a, 312b, 313b) aufweist, die mit dem Vorsprung (311) verbunden ist.

13. Sattelfahrzeug nach einem der Ansprüche 1 bis 12, des Weiteren umfassend:
eine Positionsleuchte (38), und
eine Positionsleuchtenabdeckung (39), an der die Positionsleuchte (38) befestigt ist;
wobei die Positionsleuchtenabdeckung (39) separat von der vorderen Abdeckungsbaugruppe (30) ausgebildet ist und vor dem ersten Abdeckungselement (31) angeordnet ist.

## Revendications

1. Véhicule du type à selle (1) comprenant :
un tube de tête (21) ; et
un assemblage de recouvrement avant (30) pour recouvrir le tube de tête (21) l'assemblage de recouvrement avant (30) incluant une pluralité d'éléments de recouvrement (31, 32) ; dans lequel
l'assemblage de recouvrement avant (30) comporte une pluralité de parties de fixation (61a, 62a, 63a, 64a, 65a, 66a, 61b, 62b, 63b, 64b) pour fixer un recouvrement séparé (40) à l'assemblage de recouvrement avant (30), le recouvrement séparé (40) étant formé séparément de l'assemblage de recouvrement avant (30) ; et
les parties de fixation (61a, 62a, 63a, 64a, 65a, 66a, 61b, 62b, 63b, 64b) comportent une première partie de fixation (61a, 61b) et une seconde partie de fixation (62a, 62b),
dans lequel l'assemblage de recouvrement avant (30) comporte un phare (35),
les éléments de recouvrement (31, 32) comportent :
un premier élément de recouvrement (31) pour recouvrir au moins l'avant du tube de tête (21), le phare (35) étant fixé au premier élément de recouvrement (31),
un second élément de recouvrement (32) fixé au premier élément de recouvrement (31) ;
**caractérisé en ce que** la limite (50) entre le premier élément de recouvrement (31) et le second élément de recouvrement (32) est située entre la première partie de fixation (61a, 61b) et la seconde partie de fixation (62a, 62b),
le recouvrement séparé (40) recouvre au moins une partie de la limite (50) entre le premier élément de recouvrement (31) et le second élément de recouvrement (32),
dans lequel la limite (50) entre le premier élément de recouvrement (31) et le second élément de recouvrement (32) se trouve dans une position où elle est visible sur une vue de côté du véhicule.

2. Véhicule du type à selle selon la revendication 1,
dans lequel la première partie de fixation (61a, 61b) fixe ensemble le recouvrement séparé (40) et le premier élément de recouvrement (31) ; et
la seconde partie de fixation (62a, 62b) fixe ensemble le recouvrement séparé (40) et le second élément de recouvrement (32).

3. Véhicule du type à selle selon l'une des revendications 1 à 2,
dans lequel le recouvrement séparé (40) possède une forme courbée telle que l'extrémité avant et/ou l'extrémité arrière du recouvrement séparé (40) est/sont positionnée(s) plus près de l'axe central du véhicule (1) dans le sens de la largeur du véhicule que la limite (50).

4. Véhicule du type à selle selon l'une des revendications 1 à 3,
dans lequel la limite (50) entre les premier et second éléments de recouvrement (31, 32) comporte une partie la plus extérieure (50a) positionnée le plus loin vers l'extérieur dans le sens de la largeur du véhicule, et
au moins une partie du recouvrement séparé (40) est positionnée le plus loin vers l'intérieur dans le sens de la largeur du véhicule que la partie la plus extérieure (50a) de la limite (50).

5. Véhicule du type à selle selon l'une des revendications 1 à 4,
dans lequel les parties de fixation (61a, 62a, 63a, 64a, 65a, 66a, 61b, 62b, 63b, 64b) comportent un trou traversant formé dans l'assemblage de recouvrement avant (30),
le recouvrement séparé (40) comporte un trou traversant (71a, 72a, 73a, 74a, 75a) formé dans une position tournée vers le trou traversant de l'assemblage de recouvrement avant (30), et
un élément de fixation (81, 82a, 83a, 84a, 85a) est introduit dans le trou traversant de l'assemblage de recouvrement avant (30) et le trou traversant (71a, 72a, 73a, 74a, 75a) du recouvrement séparé (40), de sorte que le recouvrement séparé (40) est fixé à l'assemblage de recouvrement avant (30).

6. Véhicule du type à selle selon la revendication 5,
dans lequel l'élément de fixation (81, 82a, 83a, 84a, 85a) est introduit depuis le trou traversant (71a, 72a, 73a, 74a, 75a) du recouvrement séparé (40) vers le trou traversant de l'assemblage de recouvrement avant (30).

7. Véhicule du type à selle selon l'une des revendications 1 à 6,
dans lequel l'assemblage de recouvrement avant (30) comporte une pluralité de protubérances (321a, 322a, 323a, 324a, 325a, 321b, 322b, 323b, 324b, 325b) espacées les unes des autres.

8. Véhicule du type à selle selon la revendication 7,
dans lequel au moins certaines des parties de fixation (61a, 62a, 63a, 64a, 65a, 66a, 61b, 62b, 63b, 64b) sont formées au niveau des crêtes des protubérances (321a, 322a, 323a, 324a, 325a, 321b, 322b, 323b, 324b, 325b).

9. Véhicule du type à selle selon l'une des revendications 1 à 8,
dans lequel un passage d'air (P1) à travers lequel passe de l'air est formé entre le recouvrement séparé (40) et l'assemblage de recouvrement avant (30).

10. Véhicule du type à selle selon la revendication 9,
dans lequel l'assemblage de recouvrement avant (30) comporte une pluralité de protubérances (321a, 322a, 323a, 324a, 325a, 321b, 322b, 323b, 324b, 325b) séparées les unes des autres, et le passage d'air (P1) est formé entre le recouvrement séparé (40) et des cavités entre les protubérances (321a, 322a, 323a, 324a, 325a, 321b, 322b, 323b, 324b, 325b).

11. Véhicule du type à selle selon l'une des revendications 1 à 10,
dans lequel le premier élément de recouvrement (31) comporte une partie en saillie (311) qui fait saillie vers l'avant, et
le phare (35) est fixé à la partie en saillie (311).

12. Véhicule du type à selle selon la revendication 11,
dans lequel le premier élément de recouvrement (31) comporte une arrête (312a, 313a, 312b, 313b) raccordée à la partie en saillie (311).

13. Véhicule du type à selle selon l'une des revendications 1 à 12, comprenant en outre :
un feu de position (38), et
un recouvrement de feu de position (39) auquel est fixé le feu de position (38) ;
le recouvrement de feu de position (39) étant séparé de l'assemblage de recouvrement avant (30) et disposé devant le premier élément de recouvrement (31).
